Europäisches Patentamt

European Patent Office

Office européen des brevets

(11) Veröffentlichungsnummer: **0 389 881 B1**

# (12) EUROPÄISCHE PATENTSCHRIFT

(45) Veröffentlichungstag der Patentschrift: **27.04.94**

(21) Anmeldenummer: **90104952.8**

(22) Anmeldetag: **16.03.90**

Die Akte enthält technische Angaben, die nach
dem Eingang der Anmeldung eingereicht wurden
und die nicht in dieser Patentschrift enthalten sind.

(51) Int. Cl.⁵: **C08G 18/42**, C08G 18/48

(54) **Verfahren zur Herstellung vom im wesentlichen geschlossenzelligen Urethan-, Harnstoff-,Biuret- und Isocyanuratgruppen aufweisenden Hartschaumstoffen und deren Verwendung.**

(30) Priorität: **29.03.89 DE 3910100**

(43) Veröffentlichungstag der Anmeldung:
**03.10.90 Patentblatt 90/40**

(45) Bekanntmachung des Hinweises auf die
Patenterteilung:
**27.04.94 Patentblatt 94/17**

(84) Benannte Vertragsstaaten:
**AT BE CH DE GB LI NL**

(56) Entgegenhaltungen:
**EP-A- 0 062 204        EP-A- 0 095 530**
**DE-A- 3 115 409        GB-A- 2 099 440**
**US-A- 4 273 882        US-A- 4 342 842**
**US-A- 4 680 214**

**Kunstoffhandbuch Band 7,Polyurethane
(1983), Seiten 96-97.**

(73) Patentinhaber: **BAYER AG**

**D-51368 Leverkusen(DE)**

(72) Erfinder: **Welte, Reiner, Dr.
Kaiserstrasse 7
D-5090 Leverkusen(DE)**
Erfinder: **Scholl, Hans-Joachim, Dr.
Am Feldrain 5
D-5000 Köln 80(DE)**

**Beschreibung**

Die Erfindung betrifft ein neues Verfahren zur Herstellung von im wesentlichen geschlossenzelligen Urethan,-Harnstoff,-Biuret- und Isocyanuratgruppen aufweisenden Hartschaumstoffen und deren Verwendung als Dämmstoffe und/oder zur Verstärkung von mechanischen Konstruktionsteilen.

Verfahren zur Herstellung von im wesentlichen geschlossenzelligen Urethan,-Harnstoff,-Biuret- und Isocyanuratgruppen aufweisenden Hartschaumstoffen sind allgemein bekannt.

Eine Übersicht zur Herstellung entsprechender Hartschaumstoffe wird beispielsweise im Kunststoff-Handbuch, Band VII, "Polyurethane", herausgegeben von R. Vieweg und A. Höchtlen, Seiten 504 ff. gegeben (Verlag Carl Hanser, München 1966). Polyisocyanurat-(PIR)-Schaumstoffe bzw. modifizierte PIR-Schaumstoffe werden beispielsweise beschrieben in Advances in Urethane Science and Technology, Vol. 3, Seiten 141 ff und Vol. 2, Seiten 241 ff. (Technomic Publishing Co., Inc., 1974 und 1973). Die Patentanmeldung EP-A-62204 beschreibt die Herstellung von offenzelligen, halbharten Schaumstoffen. Die Patentanmeldung US-A-4680214 Füllstoffe enthaltende Schaumstoffe mit einen Rohdichte über 300 kg/m$^3$.

Zur Herstellung derartiger Hartschaumstoffe werden üblicherweise aromatische Polyisocyanate mit höhermolekularen Polyolen, vorzugsweise Polyether- oder Polyesterpolyolen, in Gegenwart von Treibmitteln, Katalysatoren, Flammschutzmitteln und anderen Hilfs- und Zusatzstoffen zur Reaktion gebracht. Es ist ferner bekannt, anstelle von Polyether- oder Polyesterpolyolen Mischungen der genannten Aufbaukomponenten zu verwenden. Mitentscheidend für die Durchführung dieser Maßnahme war eine Kostensenkung, die durch Abmischung von teueren zur Herstellung von qualitativ hochwertigen PU-Hartschaumstoffen geeigneten Polyesterpolyolen mit preisgünstigen Polyetherpolyolen erzielt wird. Geeignete Polyesterpolyole mit niedriger Viskosität zur Herstellung von PU-Hartschaumstoffen mit guten mechanischen Eigenschaften werden beispielsweise in der DE-A-27 04 196 beschrieben.

Durch die Verwendung von Polyesterpolyolen als höhermolekulare Polyhydroxylverbindung zur Herstellung von Urethan- und Isocyanuratgruppen enthaltenden Hartschaumstoffen kann insbesondere deren Flammwidrigkeit verbessert und die Sprödigkeit reduziert werden. Nachteilig ist jedoch, daß Polyesterpolyole aufgrund ihrer relativ hohen Polarität im Vergleich zu Polyetherpolyolen, vorzugsweise Polyoxypropylen-polyolen, mit den als Treibmitteln eingesetzten niedrigsiedenden halogenierten Kohlenwasserstoffen nur unzureichend mischbar sind. Insbesondere bei flammschutzmittelhaltigen Isocyanuratgruppen bildenden Polyurethan-Hartschaumformulierungen mit hoher Kennzahl, deren Polyolkomponente überwiegend aus difunktionellen Polyester-polyolen besteht, können ausreichende Mengen an halogenierten Kohlenwasserstoffen als Treibmittel nicht mehr im Polyesterpolyol gelöst werden.

Dieser Nachteil wird nach DE-A 36 42 666 dadurch überwunden, daß Polyester-polyole mit Alkylseitengruppen mitverwendet werden.

Alle genannten Verfahrensweisen erfordern zwingend die Mitverwendung von FCKW-Treibmitteln, damit erwünschte Hartschaum-Stoffcharakteristiken wie z.B. Zähigkeit, Haftung an Deckschichten sowie verringerte Entflammbarkeit erzielt werden.

Wie einem Vergleichsbeispiel zu entnehmen ist, zeigen entsprechende Hartschäume ohne die Mitverwendung von FCKW-Treibmittel wesentliche Nachteile: Sprödigkeit, Entflammbarkeit und Nichthaftung an Deckschichten.

Der Erfindung lag daher die Aufgabe zugrunde, ein neues Verfahren zur Herstellung entsprechender Hartschaumstoffe mit großer Zähigkeit, Haftung und verringerter Entflammbarkeit zur Verfügung zu stellen, das

a) mit herkömmlichen Rezepturbestandteilen auskommt und dennoch

b) den Einsatz von FCKW-Treibmitteln vermeidet.

Wie überraschenderweise gefunden wurde, konnte diese Aufgabe mit dem nachstehend beschriebenen, erfindungsgemäßen Verfahren gelöst werden.

Gegenstand der Erfindung ist ein Verfahren zur Herstellung von im wesentlichen geschlosenenzelligen Urethan-, Harnstoff-, Biuret- und Isocyanuratgruppen aufweisenden Hartschaumstoffen mit einer Rohdichte- von 20-100 kg/m$^3$ durch Umsetzung von

a) aromatischen Polyisocyanaten mit

b) höhermolekularen Polyolen in Gegenwart von

c) Katalysatoren und d) Wasser als Treibmittel und gegebenenfalls

e) Kettenverlängerungs- und/oder Vernetzungsmitteln sowie

f) Hilfmitteln und/oder Zusatzstoffen,

dadurch gekennzeichnet, daß man

1. als höhermolekulares Polyol b) Mischungen aus b1) mindestens zwei Hydroxylgruppen aufweisenden Polyestern einer OH-Zahl größer 150 und/oder mindestens zwei Hydroxylgruppen aufweisenden Polyethern einer OH-Zahl größer 200, und b2) mindestens zwei Hydroxylgruppen aufweisenden ethylenoxidhaltigen Polyethern einer OH-Zahl kleiner 100 verwendet,

2. als Katalysator c) Isocyanat-Trimerisierungskatalysatoren einsetzt

und

3. die Umsetzung bei einer Kennzahl von 130-250 durchführt.

Erfindungsgemäß bevorzugt ist,

- daß als Polyolkomponente b1) Polyester einer OH-Zahl 200 - 250 oder Polyether einer OH-Zahl 300 - 400 verwendet werden,
- daß als Polyolkomponente b2) ethylenoxidhaltige Polyether einer OH-Zahl 56 - 25 und einem Ethylenoxidgehalt von 10 bis 30 Gew.-% (bezogen auf Gesamtalkylenoxid) verwendet werden,
- daß die Mengenverhältnisse der Polyolkomponenten b1):b2) 90:10 bis 10:90, bevorzugt 70:30 bis 30:70 Gew.-% betragen,
- daß 5 - 50 mMol Isocyanat-Trimerisierungskatalysatoren c) pro Mol Polyisocyanat a) eingesetzt werden und
- daß die Umsetzung bei Kennzahlen von 160 bis 230, vorzugsweise 160 bis 230 durchgeführt wird.

Gegenstand der Erfindung ist auch die Verwendung der erfindungsgemäßen, im wesentlichen geschlossenzelligen Urethan-, Harnstoff-, Biuret- und Isocyanuratgruppen aufweisenden Hartschaumstoffe als Dämmstoffe und/oder zur Verstärkung von mechanischen Konstruktionsteilen.

Von erfindungswesentlicher Bedeutung ist die Verwendung 1) der genannten Ethylenoxid-haltigen Polyether im Polyolgemisch, 2) die Verwendung von Isocyanat-Trimerisierungskatalysatoren. Diese sind z.B. in großer Zahl beschrieben in: J.H. Saunders und K.C. Frisch, Polyurethanes Chemistry and Technology, S. 94 ff. (1962). Von diesen werden bevorzugt Salze von organischen Säuren, ganz besonders Alkaliacetate, z.B. in Diolen gelöst, verwendet. Bevorzugt werden auch Mannich-Basen (DE-OS 2551 634 und DE-OS 2641 380), gegebenenfalls gemeinsam mit Salzen von organischen Sauren, eingesetzt. Erfindungswesentlich ist ferner (3.) die Einhaltung von Kennzahlen (Isocyanat-Index) größer 110.

Die genannten Trimerisierungskatalysatoren werden beim erfindungsgemäßen Verfahren in der Regel in Mengen von 1 bis 100 mMol, vorzugsweise 5 bis 50 mMol pro Mol Polyisocyanat (a), eingesetzt.

Für die Durchführung des erfindungsgemäßen Verfahrens werden verwendet:

1. Als Ausgangskomponenten, aromatische Polyisocyanate, wie sie z.B. von W. Siefken in Justus Liebigs Annalen der Chemie, 362, Seiten 75 bis 136, beschrieben werden beispielsweise solche der Formel

$$Q(NCO)_n$$

in der

n    = 2 bis 5, vorzugsweise 2 bis 3 und

Q    = einen aromatischen Kohlenwasserstoffrest mit 6 bis 15, vorzugsweise 6 bis 13 C-Atomen

bedeuten, z.B. solche Polyisocyanate, wie sie in der DE-OS 2 832 253, Seiten 10 bis 11, beschrieben werden.

Besonders bevorzugt werden in der Regel die technisch leicht zugänglichen Polyisocyanate, z.B. das 2,4-und 2,6-Toluylendiisocyanat, sowie beliebige Gemische dieser Isomeren ("TDI") und Polyphenylpolymethylen-polyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich mit 2,4- und/oder 2,6-Toluylendiisocyanat bzw. vom 4,4'- und/oder 2,4'-Diphenylmethandiisocyanat ableiten.

2. Ausgangskomponenten sind ferner höhermolekulare organische Verbindungen mit mindestens zwei Hydroxylgruppen. Erfindungsgemäß handelt es sich hierbei um ein Polyolgemisch, bestehend aus b1) Polyestern mit einer OH-Zahl größer 150, vorzugsweise von 200 bis 250, und/oder Polyethern mit einer OH-Zahl größer 200, vorzugsweise von 300 bis 400, und b2) Ethylenoxid-haltigen Polyethern mit einer OH-Zahl kleiner 100, vorzugsweise von 56 bis 25, und vorzugsweise mit einem Ethylenoxidgehalt von 10 bis 30 Gew.-%. Die Mengenverhältnisse b1):b2) betragen in der Regel 90:10 bis 10:90, bevorzugt 70:30 bis 30:70 Gew.-%.

3. Gegebenenfalls werden als Ausgangskomponenten Verbindungen mit mindestens zwei gegenüber Isocyanaten reaktionsfähigen Wasserstoffatomen und einem Molekulargewicht von 32 bis 399 mitverwendet. Man versteht hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen.

3

Diese Verbindungen weisen in der Regel 2 bis 8, vorzugsweise 2 bis 4, gegenüber Isocyanaten reaktionsfähige Wasserstoffatome auf. Beispiele hierfür werden in der DE-OS 2 832 253, Seiten 19 - 20 beschrieben.

4. Als Treibmittel wird Wasser eingesetzt.

Die unter 2., 3. und 4, genannten Komponenten werden in solchen Mengen zur Reaktion gebracht, daß die Kennzahl 130-250 beträgt.

5. Gegebenenfalls werden Hilfs- und Zusatzmittel mitverwendet wie

a) oberflächenaktive Zusatzstoffe wie Emulgatoren und Schaumstabilisatoren,

b) Reaktionsverzögerer, Zellregler der an sich bekannten Art wie Paraffine oder Fettalkohole oder Dimethylpolysiloxane sowie Pigmente oder Farbstoffe und Flammschutzmittel der an sich bekannten Art, z.B. Tris-chlorethylphosphat, Trikresylphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß- oder Schlämmkreide.

Diese gegebenenfalls mitzuverwendenden Hilfs- und Zusatzstoffe werden beispielsweise in der DE-OS 2 732 292, Seiten 21 - 24, beschrieben.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmende Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München, 1966, z.B. auf den Seiten 103 - 113 beschrieben.

Die Herstellung der im wesentlichen geschlossenzelligen Urethan-, Harnstoff-, Biuret- und Isocyanuratgruppen aufweisenden Hartschaumstoffe erfolgt in an sich bekannter Weise.

Beispiele

Beispiel 1 (Vergleichsbeispiel)

Dieses Beispiel zeigt, daß Rezepturen ohne die Mitverwendung von hydrophilierten Weichschaumpolyethern auch bei 60° C Oberflächentemperatur keine Haftung zeigen. Es handelt sich hierbei um eine übliche Hartschaumrezeptur ohne übliche FCKW-Treibmittel.

Beispiele 2 und 3

Sie zeigen, daß Schaumstoffe durch die Mitverwendung von hydrophilierten Weichschaumpolyethern bei einer Oberflächentemperatur von 60° C ausgezeichnete Haftung aufweisen.

Beispiel 4

Es zeigt, daß die Verwendung von nicht-hydrophilierten Weichschaumpolyethern keine ausreichende Verbesserung der Haftung ergibt.

Beispiele 5 und 7

Sie zeigen, daß die Mitverwendung von Flammschutzmitteln oder von Hartschaumpolyestern nicht notwendig ist, um eine gute Haftung zu erreichen; die alleinige Verwendung von hydrophilierten Weichschaumpolyethern und Hartschaumpolyethern ist ausreichend.

Beispiel 6

Es zeigt eine erfindungsgemäße Rezeptur, die auch bei Raumtemperatur bereits eine ausreichende Haftung ergibt.

Alle Komponenten werden intensiv miteinander vermischt und in einer offenen Form aufgeschäumt. Die Kenndaten der erhaltenen Schaumstoffe gehen aus der Tabelle hervor.

EP 0 389 881 B1

| Beispiel | 1 | 2 | 3 | 4 | 5 | 6 | 7 |
|---|---|---|---|---|---|---|---|
| Weichschaumpolyether 1* | – | 47,8 | 12,4 | – | 30,7 | 41,4 | 30,9 |
| Hartschaumpolyester 1* | – | – | 12,4 | 5,0 | – | 8,2 | – |
| Weichschaumpolyether 2* | – | – | – | 5,0 | – | – | – |
| Hartschaumpolyester 2* | 24,1 | 22,1 | – | – | – | – | – |
| Einbaubares Flamm-schutzdiol 1* | 10,4 | 9,6 | – | – | – | – | – |
| Hartschaumpolyether 1* | – | – | – | – | 30,7 | – | – |
| Hartschaumpolyether 2* | – | – | 12,4 | 5,0 | – | 8,2 | 30,9 |
| Flammschutzmittel 1* | 6,5 | 6,0 | – | 6,4 | – | 13,9 | – |
| Flammschutzmittel 2* | – | – | 15,9 | – | – | 13,9 | – |
| Wasser* | 3,2 | 3,6 | 2,1 | 4,0 | 3,1 | 2,9 | 3,2 |
| B 8421* | 2,0 | 1,8 | 2,6 | 1,1 | 1,3 | 2,8 | 1,3 |
| Katalysator 1* | 1,4 | 1,1 | 2,1 | 2,9 | 2,5 | 3,1 | 2,5 |
| Katalysator 2* | 1,4 | 1,1 | 0,8 | 1,6 | – | – | – |
| | – | – | – | | – | – | – |
| Isocyanat 1* | 216,0 | 172,0 | 204,3 | 234,0 | – | – | – |
| Isocyanat 2* | – | – | – | – | 196,6 | 170,4 | 196,2 |
| | | | | | | | |
| Kennzahl | 200 | 150 | 230 | 230 | 200 | 230 | 200 |

* Menge in Gew.-Teilen

Tabelle (Fortsetzung)

| Beispiel | 1 | 2 | 3 | 4 | 5 | 6 | 7 |
|---|---|---|---|---|---|---|---|
| Startzeit (sec) | 15 | 15 | 15 | 16 | 29 | 17 | 35 |
| Abbindezeit (sec) | 42 | 60 | 54 | 67 | 115 | 55 | 95 |
| Steigzeit (sec) | 60 | 83 | 95 | 98 | 145 | 85 | 110 |
| Klebfreiz.(sec) | 65 | 150 | 96 | 100 | 145 | 75 | 120 |
| Rohdichte (kg/cbm) | 34,7 | 32,8 | 58,4 | 33,2 | 37,4 | 46,7 | 38,9 |
| Haftung bei +60° C | wenig | gut | gut | keine | gut | gut | gut |
| Haftung bei R.T. | keine | wenig | keine | keine | keine | mittel | wenig |
| Oberfläche | spröde | zäh | zäh | spröde | zäh | zäh | zäh |

| | |
|---|---|
| Weichschaumpolyether 1 | Polyether der OH-Zahl 28 mit Propylenglykol als Starter und 87 % PO und endständig 13 % EO |
| Hartschaumpolyester 1 | Polyester der OH-Zahl 213 aus Adipins./Phthals. (1:0,5) und Glyzerin/Propylenglykol |
| Weichschaumpolyether 2 | Polypropylenoxidether der OH-Zahl 56 mit Propylenglykol als Starter |
| Hartschaumpolyester 2 | Polyester der OH-Zahl 380 aus Adipins./Phthals./Ölsäure und Trimethylolpropan |
| Einbaubares Flammschutzdiol | N,N-Bis-2-hydroxyethylaminomethanphosphonsäurediethylester der OH-Zahl 450 |
| Hartschaumpolyether 1 | Polyether der OH-Zahl 615 mit Trimethylolpropan als Starter, 33 % PO und endständig 67 % EO |
| Hartschaumpolyether 2 | Polypropylenoxidether der OH-Zahl 875 mit Trimethylolpropan als Starter |
| Flammschutzmittel 1 | Dimethylmethanphosphonat |

EP 0 389 881 B1

| Flammschutzmittel 2 | Trichlorisopropylphosphat |
| B 8421 | Polyethersiloxan der Fa. Goldschmidt |
| Trimerisationskatalysator 1 | 25 % Kaliumacetat in Diethylenglykol |
| Trimerisationskatalysator 2 | (N,N,N-[Dimethylamino-N-propyl]hexahydro)triazin |
| Isocyanat 1 | MDI-Prepolymer aus rohem MDI (Viskosität 24° C: ~ 200 mPa.s)und 8 % Polypropylenoxidether oder OH-Zahl 515 mit Propylenglykol als Starter, NCO-Gehalt: 24,5 % |
| Isocyanat 2 | rohes MDI (Viskosität 24° C: ~ 200 mPa.s) |

**Patentansprüche**

1. Verfahren zur Herstellung von im wesentlichen geschlossenzelligen Urethan,-Harnstoff,-Biuret- und Isocyanuratgruppen aufweisenden Hartschaumstoffen mit einer Rohdichte von 20 bis 100 kg/m$^3$ durch Umsetzung von

   a) aromatischen Polyisocyanaten mit

   b) höhermolekularen Polyolen in Gegenwart von

   c) Katalysatoren und

   d) Wasser als Treibmittel und gegebenenfalls

   e) Kettenverlängerungs-und/oder Vernetzungsmitteln sowie

   f) Hilfsmitteln und/oder Zusatzstoffen,

   dadurch gekennzeichnet, daß man

   1. als höhermolekulares Polyol b) Mischungen aus b1) mindestens zwei Hydroxylgruppen aufweisenden Polyestern einer OH-Zahl größer 150 und/oder mindestens zwei Hydroxylgruppen aufweisenden Polyethern einer OH-Zahl größer 200, und b2) mindestens zwei Hydroxylgruppen aufweisenden ethylenoxidhaltigen Polyethern einer OH-Zahl kleiner 100 verwendet,

   2. als Katalysator c) Isocyanat-Trimerisierungskatalysatoren einsetzt und

   3. die Umsetzung bei einer Kennzahl von 130 - 250 durchführt.

2. Verfahren gemäß Anspruch 1, dadurch gekennzeichnet, daß als Polyolkomponente b1) Polyester einer OH-Zahl 200 bis 250 oder Polyether einer OH-Zahl 300 - 400 verwendet werden.

3. Verfahren gemäß Anspruch 1 und 2, dadurch gekennzeichnet, daß als Polyolkomponente b2) ethylenoxidhaltige Polyether einer OH-Zahl 56 - 25 und einem Ethylenoxidgehalt von 10 bis 30 Gew.-% (bezogen auf Gesamtalkylenoxid) verwendet werden.

4. Verfahren gemäß Anspruch 1 bis 3, dadurch gekennzeichnet, daß die Mengenverhältnisse der Polyolkomponenten b1):b2) 90:10 bis 10:90, bevorzugt 70:30 bis 30:70 Gew.-%, betragen.

5. Verfahren gemäß Anspruch 1 bis 4, dadurch gekennzeichnet, daß 5 - 50 mMol Isocyanat-Trimerisierungskatalysatoren c) pro Mol Polyisocyanat a) eingesetzt werden.

6. Verfahren gemäß Anspruch 1 bis 5, dadurch gekennzeichnet, daß die Umsetzung bei Kennzahlen von 160 bis 230 durchgeführt wird.

7. Verwendung der gemäß Anspruch 1 bis 6 erhältlichen, im wesentlichen geschlossenzelligen Urethan,-Harnstoff,-Biuret- und Isocyanuratgruppen aufweisenden Hartschaumstoffe als Dämmstoffe und/oder zur Verstärkung von mechanischen Konstruktionsteilen.

**Claims**

1. A process for the production of substantially closed-cell rigid foams containing urethane, urea, biuret and isocyanurate groups and having a density of 20 to 100 kg/m$^3$ by reaction of

   a) aromatic polyisocyanates with

   b) relatively high molecular weight polyols in the presence of

   c) catalysts and

   d) water as blowing agent and, optionally,

   e) chain-extending and/or crosslinking agents and

7

f) auxiliaries and/or additives,

characterized in that

1. the relatively high molecular weight polyol b) consists of mixtures of b1) polyesters containing at least two hydroxyl groups and having an OH value of greater than 150 and/or polyethers containing at least two hydroxyl groups and having an OH value greater than 200 and b2) ethylene-oxide-containing polyethers containing at least two hydroxyl groups and having an OH value of less than 100

2. the catalyst c) is an isocyanate trimerization catalyst

and

3. the reaction is carried out at an index of 130 - 250.

**2.** A process as claimed in claim 1, characterized in that polyesters having an OH value of 200 to 250 or polyethers having an OH value of 300 to 400 are used as the polyol component b1).

**3.** A process as claimed in claims 1 and 2, characterized in that polyethers containing ethylene oxide having an OH value of 56 to 25 and an ethylene oxide content of 10 to 30% by weight (based on total alkylene oxide) are used as the polyol component b2).

**4.** A process as claimed in claims 1 to 3, characterized in that the quantitative ratios of the polyol components b1) : b2) are from 90 : 10 to 10 : 90 and preferably from 70 : 30 to 30 : 70% by weight.

**5.** A process as claimed in claims 1 to 4, characterized in that from 5 to 50 mmol isocyanate trimerization catalysts c) are used per mol isocyanate a).

**6.** A process as claimed in claims 1 to 5, characterized in that the reaction is carried out at indexes of 160 to 230.

**7.** The use of the substantially closed-cell rigid foams containing urethane, urea, biuret and isocyanurate groups obtained by the process claimed in claims 1 to 6 as insulating materials and/or for reinforcing mechanical structural components.

**Revendications**

**1.** Procédé pour la préparation de mousses dures essentiellement à alvéoles fermées, présentant des groupes uréthanne, urée, biuret et isocyanurate, possédant une masse volumique apparente de 20 à 100 kg/m$^3$, par la mise en réaction de

a) polyisocyanates aromatiques avec

b) des polyols à poids moléculaires élevés, en présence de

c) catalyseurs et

d) d'eau comme agent moussant et éventuellement

e) d'agents d'allongement de chaînes et/ou de réticulation, ainsi que

f) d'adjuvants et/ou d'additifs,

caractérisé en ce que

1. on utilise, comme polyol b) à poids moléculaire élevé, des mélanges constitués par b1) des polyesters présentant au moins deux groupes hydroxyle à indice OH supérieur à 150 et/ou des polyéthers présentant au moins deux groupes hydroxyle à indice OH supérieur à 200, et par b2) des polyéthers contenant de l'oxyde d'éthylène et présentant au moins deux groupes hydroxyle à indice OH inférieur à 100,

2. on met en oeuvre, comme catalyseur c), des catalyseurs de trimérisation d'isocyanates, et

3. on effectue la mise en réaction à un nombre caractéristique de 130-250.

**2.** Procédé selon la revendication 1, caractérisé en ce qu'on utilise, comme composant de polyol b1), des polyesters à indice OH de 200 à 250 ou des polyéthers à indice OH de 300 à 400.

**3.** Procédé selon les revendications 1 et 2, caractérisé en ce qu'on utilise, comme composant de polyol b2), des polyéthers contenant de l'oxyde d'éthylène à indice OH de 56 à 25 et ayant une teneur en oxyde d'éthylène de 10 à 30% en poids (rapportée à la teneur totale d'oxyde d'alkylène).

4. Procédé selon les revendications 1 à 3, caractérisé en ce que les proportions des composants de polyols b1):b2) s'élèvent de 90:10 à 10:90, de préférence de 70:30 à 30:70% en poids.

5. Procédé selon les revendications 1 à 4, caractérisé en ce qu'on met en oeuvre de 5 à 50 mmoles de catalyseurs c) de trimérisation d'isocyanates par mole de polyisocyanate a).

6. Procédé selon les revendications 1 à 5, caractérisé en ce qu'on effectue la mise en réaction à des nombres caractéristiques de 160 à 230.

7. Utilisation des mousses dures que l'on obtient conformément aux revendications 1 à 6, essentiellement à alvéoles fermées, présentant des groupes uréthanne, urée, biuret et isocyanurate, comme matériaux isolants et/ou pour renforcer des éléments mécaniques de construction.